Europäisches Patentamt

European Patent Office

Office européen des brevets

(11) Publication number: 0 264 535
A2

# (12) EUROPEAN PATENT APPLICATION

(21) Application number: 87106555.3

(22) Date of filing: 06.05.87

(51) Int. Cl.⁴: G11B 5/596 , G11B 33/08

(30) Priority: 24.10.86 US 922584

(43) Date of publication of application:
27.04.88 Bulletin 88/17

(84) Designated Contracting States:
DE FR GB IT

(71) Applicant: Hewlett-Packard Company
Mail Stop 20 B-O 3000 Hanover Street
Palo Alto California 94304(US)

(72) Inventor: Knowles, Vernon L.
5703 Millwright Avenue
Boise Idaho 83714(US)
Inventor: Hanks, Darwin M.
211 Village Lane
Boise Idaho 83702(US)

(74) Representative: Liesegang, Roland, Dr.-Ing.
FORRESTER & BOEHMERT
Widenmayerstrasse 4 Postfach 22 01 37
D-8000 München 22(DE)

(54) Shock and vibration disturbance compensation system for disc drives.

(57) An accelerometer (7) or other shock detecting device is mounted on a disc drive chassis (I) to detect accelerations of the chassis (I) due to externally applied shock forces and to internally generated vibration. The accelerometer (7) provides a compensation signal to the disc drive head tracking circuitry (26,27,28,24,25) to compensate for head tracking errors due to the shock or vibration induced movements of the chassis (I). The accelerometer (7) is mounted within the shock absorption system (2I) in order to detect the shock or vibration which actually accelerates the chassis (I).

EP 0 264 535 A2

## Shock and vibration disturbance compensation system for disc drives

The present invention relates generally to magnetic memory storage devices and more particularly to a means for detecting physical shock and vibration and providing a feedback signal to the head servo system to reduce tracking error.

In a magnetic disc drive a head actuator assembly must precisely position the read-write transducers or heads over the desired data track to read or write data on the associated magnetic disc. The head actuator control servo loop must be able to both initially position the read-write heads over a desired track and to maintain the heads in that position in the presence of physical shock and vibration disturbances. The source of such disturbances may be externally applied shock to the disc drive or internally generated vibration or shock from, for example, the spindle drive motor or the actuator arm drive motor.

Typically, the head actuator assembly in a disc drive will be one of two types, linear or rotary. The linear actuator employs a carriage which supports the read-write heads at one end and a coil for a voice coil actuator at the other end and rides on precision ground cylindrical ways to access the data tracks radially. A rotary actuator utilizes a pivoted carriage arm having the heads supported at one end and a voice coil at the other end with the pivot point positioned between the voice coil and the heads. More recent designs provide a rotary actuator having a carriage arm pivoted at one end and a voice coil at the other end with the heads supported on the carriage arm adjacent the voice coil. When the magnetic disc drive is disturbed by external shock forces, the disc drive chassis will be accelerated by some amount. The magnetic disc is rotatably mounted on a spindle which is mounted to the drive chassis. Thus a desired data track on the surface of the associated magnetic disc will also be accelerated the same amount as the drive chassis. The head actuator arm is mounted to the chassis on ideally frictionless bearings (in the practical case, some drag exists). The inertia of the head actuator assembly causes the read-write heads to be accelerated by some amount different than the chassis thus creating misalignment between the actual head position and the desired data track position.

It is known in the prior art to mount magnetic disc drives on shock absorbing means to reduce and attenuate impact shock forces. Such shock absorbers do not compensate for impact shock forces, but merely reduce and delay the force transmitted through the shock absorber to the disc drive chassis.

U.S. Patent Number 4,040,103 entitled, "Shock Force Compensation System" issued to Robert A. White on August 2, 1977 discloses a magnetic disc storage device having an accelerometer or other shock sensing means mounted on the base or support for the rotating magnetic storage system. The magnetic storage system is isolated from the base or support through shock absorbers which attenuate, delay and damp the impact force. The shock sensing means provides an analog signal which is applied to a transducer to make compensating adjustments in the spacing bet ween the flying magnetic head and the juxtaposed magnetic disc in anticipation of the externally applied shock force disturbing the spacing and causing the head to impact the disc surface or crash.

The prior art system mounts the accelerometer or shock sensing means on the disc drive base or support outside of the shock absorber system. Thus, the externally applied shock force transmitted through the shock absorber system and accelerating the disc drive chassis is not measured. To provide a compensation system that accurately measures the shock force actually transmitted to the disc drive chassis, an exact knowledge of the transfer function of the shock absorber system is required. Due to aging and temperature effects, this transfer function does not remain constant over time. Further, the shock sensing means of the prior art cannot detect accelerations of the disc drive chassis caused by imbalance of the rotating disc stack or by reaction forces generated by the head actuator assembly during head positioning operations.

In accordance with the principles of the present invention, there is provided an accelerometer or other shock sensing means mounted on the chassis of a rotating magnetic disc drive. The chassis is isolated from the disc drive base through shock absorbers which attenuate and damp any externally applied shock force. The accelerometer detects any acceleration of the disc drive chassis and produces an analog signal which is applied to the head actuator motor. The analog signal thus produced is coupled into the head positioning servo loop to cause the actuator motor to accelerate the read-write heads the same amount as the chassis is accelerated to maintain the read-write heads in position over the desired data track on the associated magnetic disc. The accelerometer is mounted on the disc drive chassis in a position to measure only the component of applied force causing an acceleration in the direction of head motion. The optimum placement of the accelerometer is at the center of percussion of the head actuator arm.

Mounting the accelerometer or shock sensing device on the shock isolated chassis rather than on the disc drive base eliminates the requirement to compensate the analog signal for the transfer function of the shock absorber system. Further, having the shock sensing means mounted on the isolated chassis allows the detection of accelerating forces due to vibration of the spindle motor, imbalance of the rotating disc stack or reaction forces generated when the head carriage arm is in a seek mode.

Figure 1 is a plan view of a magnetic disc drive having a rotary actuator assembly incorporating a shock sensing means according to the principles of the present invention;

Figure 2 is a side view of the magnetic disc drive shown in Figure 1 including a simplified block diagram of the actuator arm servo control loop; and

Figure 3 is a side view of a magnetic disc drive having a linear actuator assembly incorporating a shock sensing means according to the principles of the present invention.

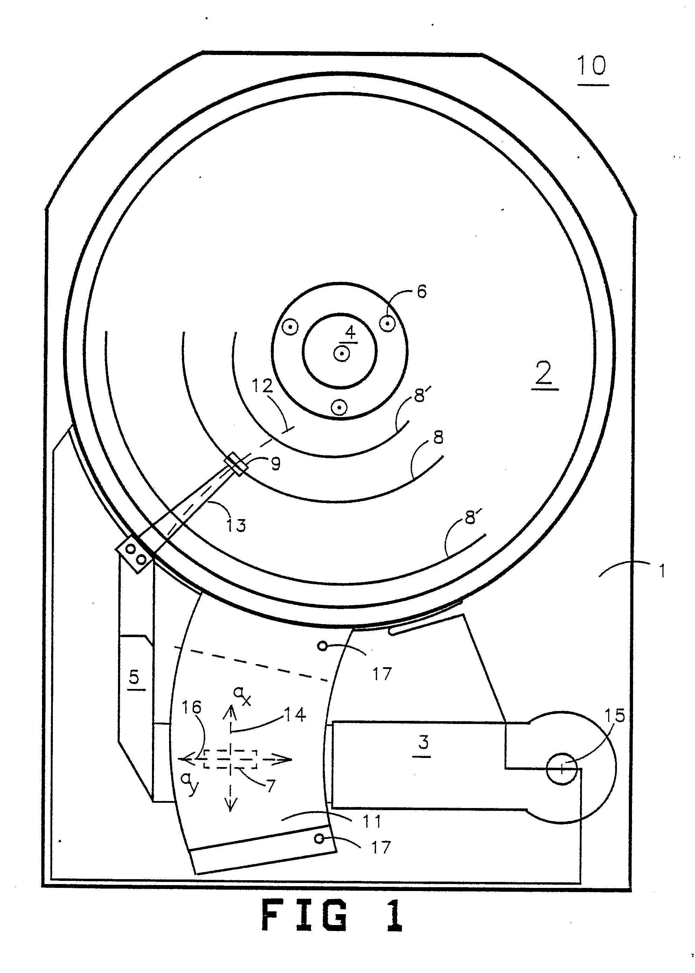

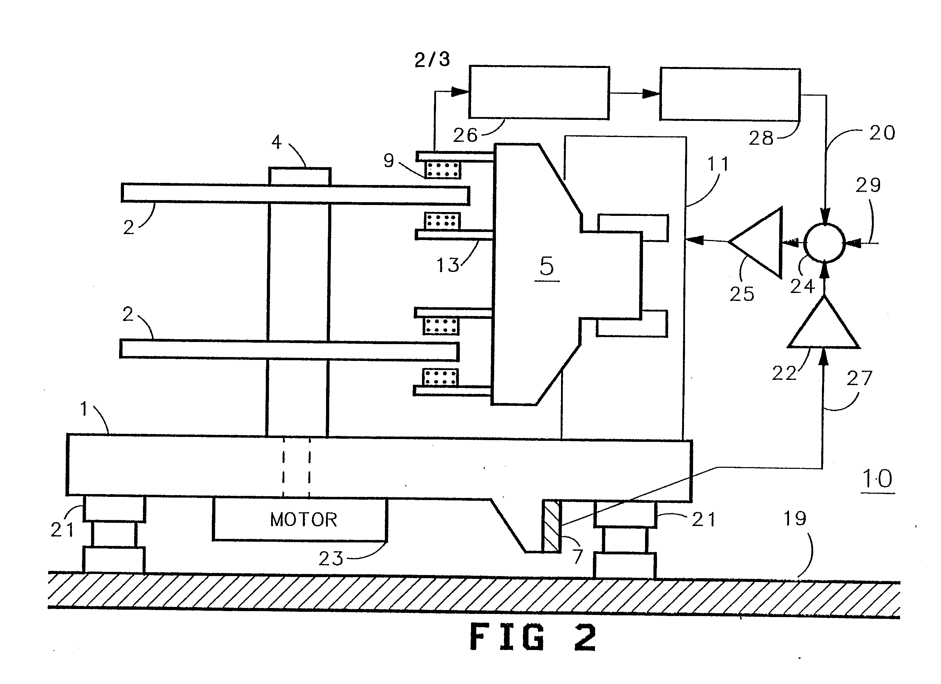

Refering now to Figures 1 and 2, disc drive 10 includes a chassis 1 having magnetic disc 2 mounted on spindle 4 by bolts 6 and a rotary head actuator assembly pivotally mounted on pivot shaft 15. The head actuator assembly includes a head support plate 5 formed integral with actuator arm 3 at one end to extend outwardly therefrom. Head flexures 13 are attached to support plate 5 and support magnetic read-write heads or transducers 9 which may be any conventional magnetic head assembly. In response to electrical control signals, voice coil motor assembly 11 causes actuator arm 3 to rotate about the pivot shaft 15 radially inwardly and outwardly on disc 2 along a path approximately shown by the dashed line 12 to position heads 9 over a desired data track 8 on the disc 2 to read or write data on the associated disc 2. Crash stops 17 are steel rods which limit the travel of actuator arm 3 to an arc of approximately 18 degrees. Accelerometer 7 is mounted on the underside of chassis 1 centered directly beneath the motor assembly 11 at the center of percussion for the actuator arm 3.

The accelerometer 7 is mounted such that it detects the acceleration component $a_x$ of the chassis 1 in a direction normal to the longitudinal axis of actuator arm 3 represented by dashed line 14. Such an acceleration $a_x$ will physically displace the chassis 1 including the disc 2 and the data tracks 8, 8' on the disc 2. Further, since the actuator arm 3 is pivotally mounted on pivot shaft 15, an acceleration $a_x$ will cause the actuator arm to rotate about the pivot shaft 15 in a direction opposite that of the acceleration $a_x$ further displacing the read-write head 9 from the desired position over a particular data track. Since the actuator arm 3 only pivots over a small arc, an acceleration component

$a_y$ of the chassis 1 in a direction generally parallel to the longitudinal axis of the actuator arm 3, as shown by dashed line 16, will produce miminal displacement of the head 9 relative to its desired position over a data track 8 on disc 2.

The chassis 1 is mounted and supported on the disc drive mainframe 19 with shock absorbers 21. The shock absorbers 21 attenuate and damp external shock and vibration thus isolating the chassis 1 from the mainframe 19 and the external environment. Since the accelerometer 7 or other shock sensing means is mounted on the chassis 1, only the actual acceleration of the chassis 1 due to external shock transmitted through the shock absorbers 21 or other chassis mounted shock or vibration sources is measured by the accelerometer 7. Mounting the accelerometer 7 on the isolated chassis 1 eases the specifications and tolerance requirements for the shock absorbers 21 and eliminates any requirement for the accelerometer system to compensate its output signal for the transfer function of the shock absorbers 21.

Magnetic disc 2 may be a single disc or a disc pack having a number of magnetic discs arranged in a stack having a common axis of rotation mounted on spindle 4 by bolts 6. Spindle drive motor 23 supports and rotates spindle 4. Read-write head 9 is positioned over a desired data track 8 by voice-coil motor 11 in response to position signals input to summer 24 on line 29 generated by a head positioning system (not shown). Head 9 is maintained in position over a desired data track by a tracking servo loop comprising head position sensing circuit 26, servo loop compensation circuit 28 and summer 24. The accelerometer 7 senses any acceleration component $a_x$ of the chassis 1 and outputs an accelerometer signal in volts/g on line 27. Amplifier 22 scales the accelerometer signal and provides a compensation signal to the tracking servo loop at the summer 24. Summer 24 sums the head position signal on line 29 and the accelerometer compensation signal from amplifier 22 with a feedback signal indicative of the actual head 9 position on line 20 to provide a head tracking signal to the head positioning motor 11 via power amplifier 25.

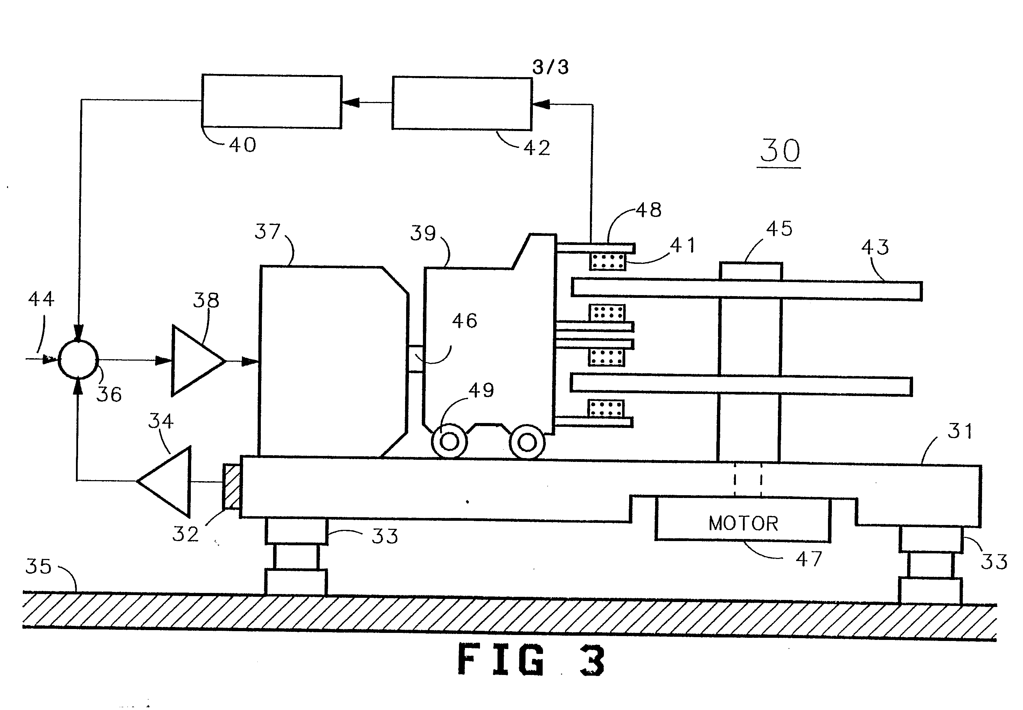

Accelerometer 7 senses acceleration and provides an output signal proportional to that acceleration. Typically the actuator drive motors utilized in both rotary actuators (as shown in Figures 1 and 2) and linear actuators (as shown in Figure 3) are current controlled voice coil motors which produce a given acceleration for a given current input. Thus, the compensation signal provided by the accelerometer 7 may be directly coupled to the actuator motor 11 control system without additional signal processing.

Referring now to Figure 3, a disc drive 30 utilizing a linear head actuator assembly 39 according to the principles of the present invention is shown. Disc drive chassis 31 is supported on mainframe 35 by shock absorbers 33 which attenuate and damp external shocks applied to the mainframe 35. Chassis 31 serves as a support for movable head support carriage 39 and spindle drive motor 47 which supports and rotates spindle 45 having one or more magnetic discs 43 thereon.

Read-write heads 41 are supported on head flexures 48 mounted on head support carriage 39. Read-write heads 41 are positioned over a desired data track (not shown) on an associated magnetic disc 43 in response to head position signal on line 44. Head actuator motor 37 responsive to said head position signal moves the head support carriage 39 via connecting shaft 46 on roller bearings 49 or equivalent low friction guides. Motor 37 may be a voice coil motor or other type of linear motor.

Accelerometer 32 is mounted on chassis 31 in such a position to detect any acceleration components $a_x$ of chassis 31 in a direction parallel to the direction of motion of the head support carriage 39. Accelerometer 32 provides an analog compensation signal representative of the magnitude of an acceleration component $a_x$ to amplifier 34 for proper scaling. As described hereinabove, the acceleration compensation signal, the head position signal and a feedback signal provided by the tracking servo loop head position sensing and compensation circuits 40, 42 are summed in summer 36 to provide a head tracking signal to the head actuator motor 37 via power amplifier 38.

Although the present invention has been described with respect to a magnetic disc drive, it will be appreciated by those skilled in the art that the principles of the present invention may be equally applicable to optical or other types of memory storage devices and that various modifications and substitutions may be effected therein by one skilled in the art without departing from the scope or spirit of the invention as defined in the appended claims.

## Claims

1. Apparatus for reducing transducer tracking errors caused by shock and vibration disturbances in a disc drive, said apparatus comprising: a chassis (1);
rotatable storage media (2) mounted on said chassis (1);
at least one transducer (9) mounted on said chassis (1) adjacent said storage media (2) for movement relative to a major surface of said storage media (2); and
transducer positioning means (3,5) for positioning said transducer (9) to a desired position adjacent said media (2) surface;
characterized in that shock sensing means (7) are mounted on said chassis (1) for sensing shock forces and vibration disturbances and generating a first signal indicative of the magnitude of said shock force and vibration disturbances, and in that said transducer positioning means (3,5) are responsive to said first signal for adjusting the position of said transducer (9) to compensate for displacement of said chassis (1) caused by said shock forces and vibration disturbances.

2. Apparatus as in claim 1, characterized by a frame (19) and shock absorbing means (21) on said frame (19) for mounting and supporting said chassis (1).

3. Apparatus as in claim 1 or 2, characterized in that said transducer positioning means (3,5) comprises:
a pivot assembly (15) mounted to said chassis (1);
an elongated actuator arm (3) having one end pivotally mounted to said pivot assembly (15) and extending from said pivot assembly (15);
transducer support means (5) fixedly attached to the other end of said elongated actuator arm (3) extending outwardly therefrom, said head support means (13) including a plurality of flexible support arm (13) for mounting at least one transducer (9); and
motor means (11) responsive to a control signal for pivoting said elongated actuator arm (3) about said pivot assembly (15) such that said transducer (9) is positioned to and tracks said desired position adjacent said media (2) surface.

4. Apparatus as in any one of the preceding claims further including control means, characterized by:
tracking servo means (26,28) providing a second signal indicative of the actual position of said transducer (9) relative to said media (2) surface;
amplifier means (22) coupled to said shock sensing means (7) for amplifying and scaling said first signal providing a shock compensation signal; and
summer means (24) coupled to said tracking servo means (26,28) and said amplifier means (22) having an input for receiving a transducer position signal, said summer means (24) summing said shock compensation signal, said transducer position signal and said second signal to provide said control signal.

5. Apparatus as in any one of the preceding claims, characterized in that said shock sensing means (7) is an accelerometer mounted on said chassis (1) for detecting accelerations of said chassis (1) in the direction of said transducer (9) movement.

6. Apparatus as in one of claims 3 to 5, **characterized** in that said actuator arm (3) is pivotally mounted to said chassis (I) and has an axis of rotation parallel with the axis of rotation of said rotatable storage media (2) and supports at least one transducer (9).

7. Apparatus as in either one of claims 5 and 6, **characterized** in that said accelerometer (7) is disposed on said chassis (I) adjacent the center of percussion of said elongated actuator arm (3).

8. Apparatus as in one of claims I, 2, 4 or 5, **characterized** in that said transducer positioning means comprises a support carriage (39) mounted on said chassis (I); and motor means (37) responsive to a control signal for moving said support carriage (39) to position and maintain said transducer (9) over a desired data track (8) on said rotatable storage media (2) and for moving said transducer (9) from track to track.

9. Method for minimizing external shock and vibration induced transducer tracking errors in a rotating disc storage system including a chassis (I), at least one rotating data storage disc (2), at least one transducer (9) supported adjacent the major surfaces of said disc (2), and a transducer actuator assembly (3,5) for supporting and positioning said transducer (9) at a desired one of a multiplicity of concentric data tracks (8) on said data disc (2), **characterized** by the steps of:
mounting a shock sensing means (7) on said chassis (I);
determining the magnitude of shock and vibration force;
generating a compensation signal indicative of the magnitude of said shock and vibration force;
applying said compensation signal to said actuator assembly (3,5); and
adjusting the position of said transducer (9) relative to said storage disc (2) to compensate for shock and vibration induced acceleration and displacement of said chassis (I).

**FIG 1**

FIG 2

2/3

0 264 535

3/3

30

0 264 535

**FIG 3**